Europäisches Patentamt

European Patent Office

Office européen des brevets

(19)

(11) Veröffentlichungsnummer: **0 135 229**
**B1**

(12) # EUROPÄISCHE PATENTSCHRIFT

(45) Veröffentlichungstag der Patentschrift: **22.11.90**

(51) Int. Cl.⁵: **H 04 M 3/56**

(21) Anmeldenummer: **84201170.2**

(22) Anmeldetag: **14.08.84**

(54) **Verfahren und Schaltungsanordnung zur Herstellung von Konferenzverbindungen in einem Vermittlungssystem.**

(30) Priorität: **18.08.83 DE 3329779**

(43) Veröffentlichungstag der Anmeldung:
**27.03.85 Patentblatt 85/13**

(45) Bekanntmachung des Hinweises auf die
Patenterteilung:
**22.11.90 Patentblatt 90/47**

(84) Benannte Vertragsstaaten:
**BE DE FR GB NL SE**

(56) Entgegenhaltungen:
**EP-A-0 081 799**
**US-A-3 604 855**
**US-A-4 054 757**

**IEEE INTERNATIONAL CONFERENCE ON COMMUNICATIONS, Band 2/3, 19. - 22. Juni 1983, Seiten 805-809, IEEE, Boston, US; B.J. BARKAUSKAS et al.: "Network services complex: a generalized customer interface to the telephone network"**

(73) Patentinhaber: **Philips Patentverwaltung GmbH Wendenstrasse 35 Postfach 10 51 49 D-2000 Hamburg 1 (DE)**
(84) **DE**

(73) Patentinhaber: **N.V. Philips' Gloeilampenfabrieken Groenewoudseweg 1 NL-5621 BA Eindhoven (NL)**
(84) **BE FR GB NL SE**

(72) Erfinder: **Vary, Peter, Dr.-Ing.**
**Fasanenweg 70**
**D-8522 Herzogenaurach (DE)**
Erfinder: **Hofmann, Rudolf, Dipl.-Ing.**
**Tannenweg 6**
**D-8550 Forchheim (DE)**
Erfinder: **Hellwig, Karl, Dipl.-Ing.**
**Hauptstrasse 32**
**D-8729 Wonfurt (DE)**

(74) Vertreter: **Peuckert, Hermann, Dipl.-Ing. et al Philips Patentverwaltung GmbH Wendenstrasse 35 Postfach 10 51 49 D-2000 Hamburg 1 (DE)**

# EP 0 135 229 B1

**Beschreibung**

Die Erfindung betrifft ein Verfahren und eine Schaltungsanordnung zur Herstellung von Konferenzverbindungen in einem Vermittlungssystem gemäß dem Oberbegriff der Ansprüche 1 und 10.

Aus EP—A 0 081 799 ist ein Verfahren zum Herstellen einer Konferenzverbindung in einer digitalen Fernsprechvermittlungsanlage bekannt, wobei nichtlinear codierte Sprachproben in linear codierte Sprachproben umgesetzt, addiert und anschließend wieder in nichtlinear codierte Sprachproben umgesetzt werden. Hierzu werden die von den einzelnen Teilnehmern der Konferenzverbindung stammenden Sprachproben miteinander verglichen und die die höchste Intensität aufweisende Sprachprobe unbedämpft und die restlichen Sprachproben um einen vorgegebenen Wert bedämpft der Addition zugeführt. Zur Umwandlung der nichtlinear codierten Sprachproben in linear codierte Sprachproben sind die Sprachproben einem Codewandler zugeführt. Durch Steuersignale wird der Codewandler zwischen unbedämpfter und bedämpfter Weitergabe der linear codierten Sprachproben umgeschaltet. Der auf diese Weise im Codewandler für die gedämpfte Wiedergabe der Sprachproben festgelegte Dämpfungswert ist daher während des Betriebes der Fernsprechvermittlungsanlage nicht veränderbar.

Bei einer Konferenzverbindung werden einem Konferenzteilnehmer die Sprachsignale aller anderen am Konferenzgespräch beteiligten Personen übermittelt. Zu diesem Zweck wird für jeden Konferenzteilnehmer eine eigene Teilsumme aller empfangenen und zum Konferenzbetrieb gehörenden Sprachsignale ohne den Anteil des eigenen Sprachsignals gebildet. Liegen die Sprachsignale als digitale Codeworte vor (z.B. Quellencodierung), so ist wegen des begrenzten Wertevorrats keine uneingeschränkte Addition möglich. Beispielsweise ist der darstellbare Zahlenbereich normiert auf Werte zwischen $-1 \leq u(kT) < +1$, wobei $u(kT)$ als Symbol für einen Abtastwert zum Zeitpunkt $kT$ und $T$ für die Länge eines Abtastintervalls steht. Während einer Gesprächsphase, in der zwei oder mehr Konferenzteilnehmer "sprechaktiv" sind, kann es durchaus vorkommen, daß bei der Aufsummation aller digitalen Codeworte der darstellbare Zahlenbereich überschritten wird, z.B. über den Wert $+1$ hinaus. Da aber dieser Wert nicht darstellbar ist, ergibt die Gesammtsumme in diesem Fall einen negativen Zahlenwert (Wirkung des "Zahlenkreises"). Nach der Wandlung der digitalen Codeworte in ein analoges Signal wirken sich derartige Verfälschungen in Form von Verzerrungen des Sprachsignals aus.

Aus der US—PS 3,604,855 ist es hierzu bekannt, aus den Sprachproben der Konferenzteilnehmer gebildete Summencodeworte, deren Zahlenwert größer ist als der Zahlenbereich der Codeworte, die an die Konferenzteilnehmer weitergegeben werden, vor der Weitergabe an die Konferenzteilnehmer mittels einer Division in den Zahlenbereich der Codeworte zurückzuführen. Hierzu werden die Summencodeworte durch eine Zahl (Divisor) geteilt, die dem Faktor entspricht, um den diese Summencodeworte den zulässigen Zahlenbereich überschreiten. Der Divisor bleibt stets auf dem Wert Eins, wenn nur ein einziger Konferenzteilnehmer spricht. Alle Konferenzteilnehmer erhalten dann ihre Summencodeworte unabgeschwächt. Nur wenn gleichzeitig andere Teilnehmer in die Konferenz eintreten, werden die Summencodeworte abgeschwächt.

Aus der DE—OS 31 47 492 ist eine Schaltungsanordnung zum Herstellen von Konferenzverbindungen in einer PCM-Zeitmultiplex-Vermittlungsanlage bekannt. Dabei werden linearisierte PCM-Worte vor dem Eintragen in einen Festwertspeicher mit jeweils einem Dämpfungsfaktor multipliziert. Der Dämpfungsfaktor ist an die Dämpfungsverhältnisse der jeweiligen Anschlußleitung angepaßt und wird vor Inbetriebnahme z.B. einer PCM-Nebenstellenanlage ermittelt und unveränderbar festgelegt. Dabei wird der ermittelte Dämpfungsfaktor in eine PCM-Tabelle eingetragen, welche zur Wandlung von logarithmischer in linearer Darstellung der Zahlenwerte verwendet wird. Durch die Vorgabe eines festen Dämpfungsfaktors können leise und laute Sprecher (Konferenzteilnehmer) nicht voneinander unterschieden werden, so daß nach wie vor Verzerrungen des Sprachsignals auftreten können, wenn mehrere Konferenzteilnehmer gleichzeitig sprechen.

Der Erfindung liegt die Aufgabe zugrunde, ein aus der EP—A 0 081 799 bekanntes Verfahren derart weiterzubilden, daß bei Konferenzbetrieb eine Verzerrung der Sprachsignale — infolge der Überschreitung des dargestellten Zahlenbereiches bei der Berechnung der jedem Konferenzteilnehmer zugeführten Summen der Sprachproben der anderen Konferenzteilnehmer — weitgehend vermieden wird.

Diese Aufgabe wird durch die im Kennzeichenteil der Ansprüche 1 und 10 angegebenen Merkmale gelöst.

Bei der ersten Ausführungsform werden die Gewichtungsfaktoren vor der multiplikativen Verknüpfung unter Berücksichtigung der gemessenen Sprachintensität so eingestellt, daß kein Überlauf bei der Bildung der Endteilsummen-Codeworte auftritt.

Bei der zweiten Ausführungsform werden die gewichteten Teilnehmer-Codeworte einer Verknüpfungsschaltung zur Bildung von Teilsummen zugeführt, welche mit einer Dämpfungsregelschaltung verbunden ist. Die Erweiterung des Zahlenbereiches (z.B. von 12 Bit auf 16 Bit) verhindert bei der Bildung der Teilsummen einen Überlauf. Vor dem Aussenden der Teilsummen zu den Konferenzteilnehmern sorgt die Dämpfungsregelschaltung (durch Dämpfungsfaktoren) dafür, daß die Teilsummen wieder innerhalb des ursprünglichen Zahlenbereiches liegen. Da eine Regelschaltung i.a. mit einer Zeitverzögerung arbeitet, sorgt ein in der Dämpfungsregelschaltung angeordneter Begrenzer für die Einhaltung des zulässigen Zahlenbereiches. Das Abschneiden von Signalspitzen ist weit weniger hörbar als ein erfolgter Überlauf. Die Abschwächung nicht-sprechaktiver Konferenzteilnehmer sorgt dafür, daß Störgeräusche, hervorgerufen z.B. durch Leitungsrauschen oder Umgebungsgeräusche, auf ein nichtstörendes Maß reduziert werden. Zur Verminderung des Schaltungsaufwands kann diese Abschwächung der Teilnehmersignale entfallen, so daß die Teilnehmer-Codeworte unmittelbar der Verknüpfungsschaltung zugeführt werden.

Die Erfindung wird nachfolgend anhand der in der Zeichnung dargestellten Ausführungsformen näher beschrieben und erläutert. Es zeigt:

Fig. 1 für eine erste Ausführungsform und

Fig. 2 für eine zweite Ausführungsform das Blockschaltbild der erfindungsgemäßen Konferenzeinrichtung.

Fig. 3 eine Verknüpfungsschaltung und

Fig. 4 eine Dämpfungsregelschaltung für die zweite Ausführungsform gemäß Fig. 2.

Fig. 5 Die zeitlichen Verläufe der auftretenden Sprachsignale, Meßwerte und Gewichtungsfaktoren, für die zweite Ausführungsform gemäß Fig. 2 und

Fig. 6 für die erste Ausführungsform gemäß Fig. 1.

Fig. 7 Die zeitlichen Verläufe von Endteilsummen-Codewort und geglätteten Dämpfungsfaktor für die zweite Ausführungsform gemäß Fig. 2, bei Anwendung einer ersten Kennlinie und

Fig. 8 bei Anwendung einer zweiten Kennlinie.

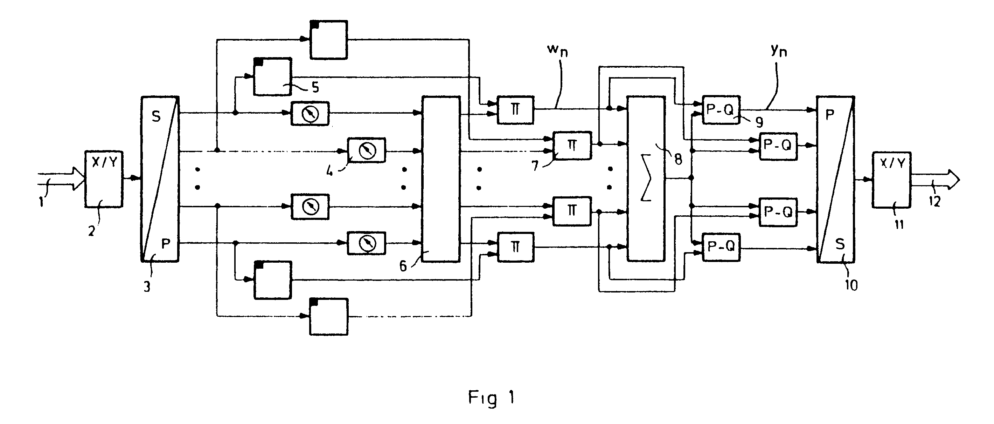

Fig. 1 zeigt für die erste Ausführungsform als Blockschaltbild eine Schaltungsanordnung zur Herstellung von Konferenzverbindungen in einem Vermittlungssystem. Die von den (in der Zeichnung nicht dargestellten) Teilnehmereinrichtungen kommenden Sprachsignale werden einer A/D-Umsetzung unterzogen. Anschließend werden Abtastwerte in eine den Übertragungseigenschaften des Übertragungskanals angepaßten Codierung, z.B. unter Verwendung eines PCM-Codes mit logarithmischer Kennlinie, umgesetzt. Diese PCM-Worte können auf der Empfangsseite beispielsweise in einem PCM-Multiplexgerät zum Datenstrom von PCM-Worten zusammengefaßt und über eine Sammelschiene 1 einer Konferenzeinrichtung zugeführt werden. Vorzugsweise sind in den ersten N Zeitschlitzen innerhalb eines Pulsrahmens die N Codeworte der am Konferenzbetrieb beteiligten Gesprächsteilnehmer angeordnet.

Um Fehler bei der algebraischen Aufsummierung von Teilnehmer-Codeworten zu vermeiden (infolge der nichtlinearen Codierungskennlinie), ist eine Linearisierung der ankommenden Codeworte erforderlich. Diese Funktion übernimmt ein Codeumsetzer 2. Ein mit dem Codeumsetzer 2 verbundener Seriell-Parallel-Wandler 3 führt eine Aufteilung des Datenstroms auf Zeitkanäle der Konferenzteilnehmer durch. Jeder Ausgang des Seriell-Parallel-Wandlers 3 ist mit einem Speicher 5 verbunden, in welchem das Teilnehmer-Codewort in linearer Codierung eingetragen wird (Zwischenspeicherung). Zur Messung der Sprachintensität der Eingangssignale mittels einer Meßeinrichtung 4 ist jeder Ausgang des Seriell-Parallel-Wandlers 3 mit dieser verbunden. Zur Messung der Sprachintensität kann z.B. ein Pegelkriterium oder ein Leistungskriterium verwendet werden. Eine Steuereinrichtung 6 berechnet aus dem Vergleich der gemessenen Sprachintensitäten aller Konferenzteilnehmer Gewichtungsfaktoren. Mit den Gewichtungsfaktoren werden die zwischengespeicherten Codeworte vor der Bildung von Teilsummen mit Hilfe von Multiplizierern 7 gewichtet.

Die Bildung von Endteilsummen erfolgt derart, daß zu jedem Konferenzteilnehmer die gewichteten Codeworte aller übrigen Konferenzteilnehmer übertragen werden. Damit sich der Konferenzteilnehmer nicht selber hört (Echo bei langen Signallaufzeiten), wird das eigene Sprachsignal bei der Summenbildung nicht berücksichtigt. Bei der ersten Ausführungsform werden dazu in einem Summierer 8 alle gewichteten Teilnehmer-Codeworte zu einem Endsummen-Codewort aufsummiert. Die Bildung des zum Konferenzteilnehmer zu übertragenden Codewortes erfolgt in Subtrahierern 9 durch Subtraktion des gewichteten Teilnehmer-Codewortes.

In einem mit den Subtrahierern 9 verbundenen Parallel-Seriell-Wandler 10 werden die zu übertragenden Teilnehmer-Codeworte wieder in den seriellen Datenstrom eingefügt und über eine Sammelschiene 12 übertragen. Vor der Übertragung erfolgt in einem Umsetzer 11 eine komprimierte Codierung.

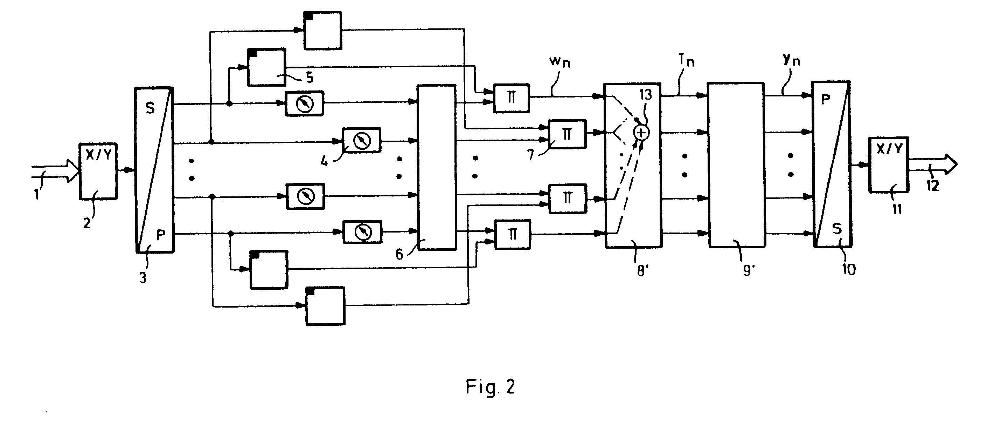

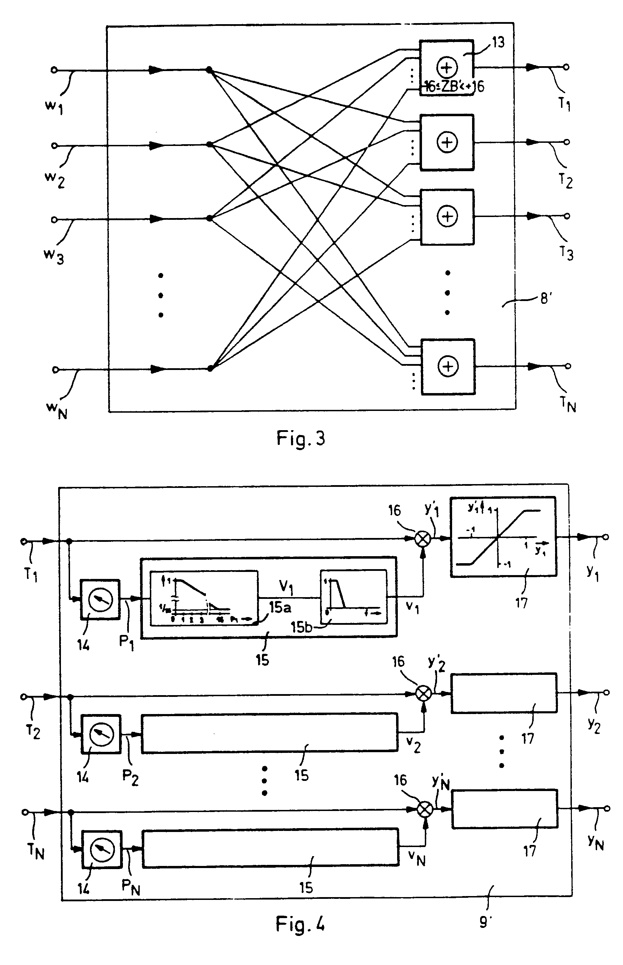

Bei der in Fig. 2 dargestellten zweiten Ausführungsform werden bei der Durchführung der Summenbildung mittels einer Verknüpfungsschaltung 8' Teilsummen $T_n$ (k) gebildet, wofür Addierer 13 mit einem erweiterten Zahlenbereich ZB' verwendet werden, um einen Überlauf der Teilsummen $T_n$ (k) zu verhindern (siehe Fig. 3). Zur Vereinfachung der Beschreibung wird im folgenden der Laufparameter k weggelassen. Stehen z.B. für die Codierung der Teilnehmersignale 12 Bit für einen normierten Zahlenbereich $-1 \leq ZB < +1$ zur Verfügung, so können bei Verwendung von 16-Bit-Addierern (d.h. ein normierter Zahlenbereich $-16 \leq ZB' < +16$) mindestens 16 Teilnehmer-Codeworte aufsummiert werden, ohne den zulässigen (erweiterten) Zahlenbereich ZB' zu überschreiten.

Die Teilsummen $T_n$ müssen vor dem Aussenden zu den Teilnehmern wieder auf den ursprünglichen Zahlenbereich (im Beispiel auf $-1 \leq ZB < +1$) zurückgeführt werden. Dies geschieht am einfachsten durch Begrenzen mittels Begrenzer 17 vor dem Senden (siehe Fig. 4). Liegt der Wert der Teilsumme $T_n$ geringfügig über dem ursprünglichen Zahlenbereich ZB, so ist die Begrenzung kaum hörbar.

Wird dagegen der Bereich erheblich überschritten (z.B. wenn mehr als zwei oder drei Teilnehmer gleichzeitig sprechen), so werden durch eine zusätzliche Dämpfungsregelschaltung 9' die Signale an den ursprünglichen Bereich herangeführt. Dies kann z.B. in der in Fig. 4 dargestellten Art erfolgen:

In Abhängigkeit des mittels einer in der Dämpfungsregelschaltung 9' angeordneten zweiten Meßeinrichtung 14 gemessenen Pegels $p_n$ der Teilsummen $T_n$ wird ein Dämpfungsfaktor $v_n$, $n = 1 \ldots N$ gebildet. Die mit $v_n$ multiplizierte Teilsumme $T_n$ wird den Begrenzern 17 zugeführt.

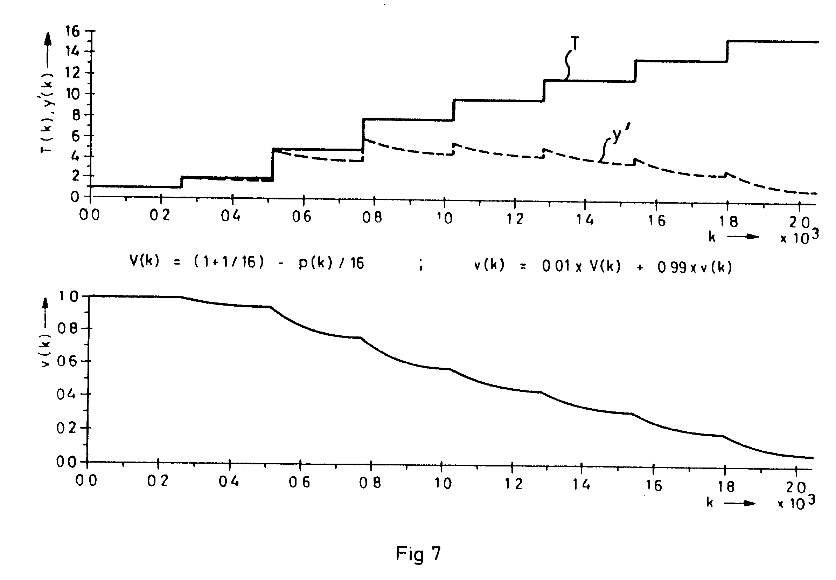

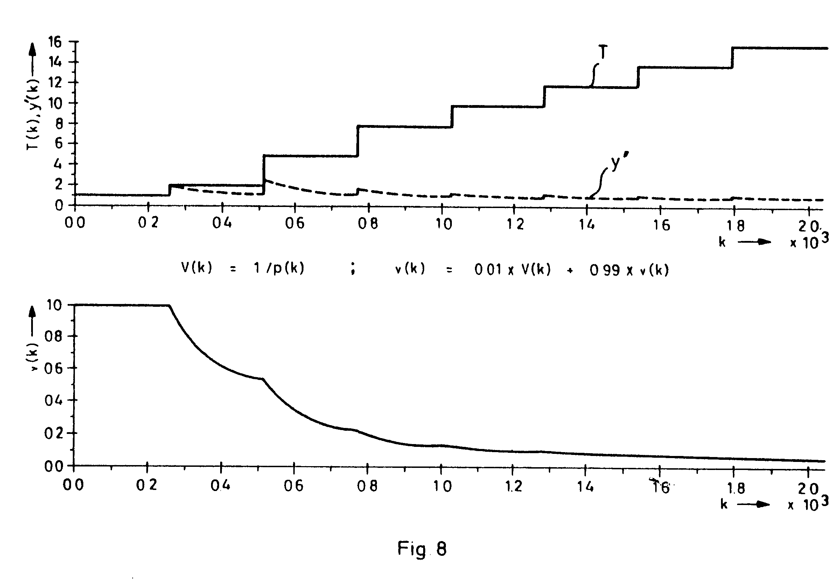

In Fig. 7 und Fig. 8 ist der zeitliche Verlauf des Endteilsummen-Codeworts y' und des geglätteten Dämpfungsfaktor v dargestellt. Im Umwerter 15a, welcher in der Einrichtung 15 angeordnet ist und welcher beispielsweise als Kennlinienspeicher ausgeführt ist, wird dem mittels der zweiten Meßeinrichtung 14 gemessenen Pegel $p_n$ der Dämpfungsfaktor $V_n$ zugeordnet. Diese Zuordnung erfolgt beim in Fig. 7 dargestellten Dämpfungsfaktor $V_n$ gemäß der gespeicherten Kennlinie:

$$(I) \quad V_n = \begin{cases} 1 & ; \text{ für } 0 \leq p_n \leq 1 \\ a + b \cdot p_n & ; \text{ für } 1 < p_n \end{cases}$$

und beim in Fig. 8 dargestellten Dämpfungsfaktor $V_n$ gemäß der gespeicherten Kennlinie:

$$(II) \quad V_n = \begin{cases} 1 & ; \text{ für } 0 \leq p_n \leq 1 \\ \dfrac{1}{p_n} & ; \text{ für } 1 < p_n \leq 16 \end{cases}$$

Zur Glättung des so erhaltenen Dämpfungsfaktors $V_n$ ist in der Einrichtung 15 dem Umwerter 15a ein Tiefpaßfilter 15b nachgeordnet, an dessen Ausgang der geglättete Dämpfungsfaktor $v_n$ abgegriffen wird. Die mit $v_n$ multiplizierte Teilsumme $T_n$ wird den Begrenzern 17 zugeführt.

In einem mit den Begrenzern 17 verbundenen Parallel-Seriell-Wandler 10 werden die zu übertragenden Endteilsummen-Codeworte $y_n$ wieder in den seriellen Datenstrom eingefügt und über die Sammelschiene 12 übertragen. Vor der Übertragung erfolgt im Umsetzer 11 eine komprimierte Codierung.

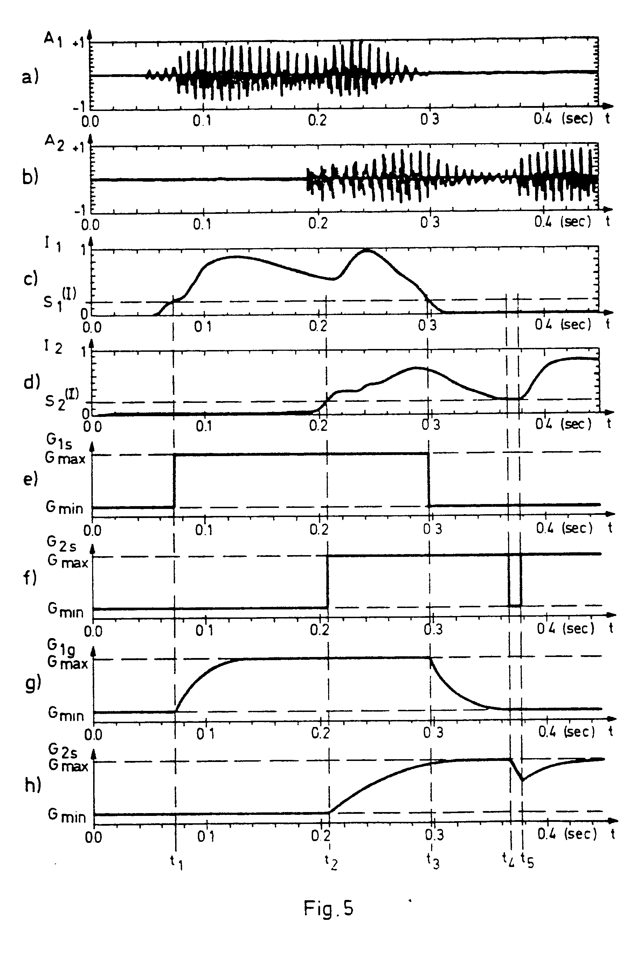

Die Einstellung der Gewichtungsfaktoren für die zweite Ausführungsform gemäß Fig. 2 wird im folgenden anhand der Fig. 5 erläutert. Dabei wird von einer Gesprächssituation ausgegangen, in der nur ein Teilnehmer spricht (Zeitpunkt $t_1$). Der sprechende Teilnehmer wird im weiteren Gesprächsverlauf von einem anderen Konferenzteilnehmer unterbrochen (Zeitpunkt $t_2$).

Gemäß der Erfindung werden die ankommenden Sprachsignale je nach Intensität abgeschwächt. Beispielsweise werden von sprechenden Konferenzteilnehmern (sprechaktiv) empfangene Signale weniger abgeschwächt als die von stillen Konferenzteilnehmern (nicht sprechaktiv). Die Entscheidung ob ein Konferenzteilnehmer gerade spricht (sprechaktiv) oder ob er gerade schweigt (nicht sprechaktiv), kann beispielsweise mit Hilfe eines Leistungskriteriums erfolgen.

In Fig. 5a) ist der zeitliche Verlauf der Sprachsignale eines ersten Konferenzteilnehmers und in Fig. 5b eines zweiten Konferenzteilnehmers dargestellt. Die Fig. 5c) und 5d) geben den zeitlichen Verlauf der Sprachintensität der beiden Teilnehmer wieder. Dazu wurde in diesem Beispiel vom Sprachsignal gemäß Fig. 5a) bzw. Fig. 5b) der Betrag gebildet und eine Glättung mittels eines Tiefpaßfilters 4. Grades vorgenommen. Sobald die Sprachintensität $I_1$ bzw. $I_2$ der beiden Konferenzteilnehmer eine Schwelle $S_1^{(I)}$ bzw. $S_2^{(I)}$ überschreitet (Zeitpunkt $t_1$ bzw. Zeitpunkt $t_2$), werden die beiden Konferenzteilnehmer als sprechaktiv eingestuft. Wie aus Fig. 5e), 5g) ersichtlich ist, wird dem ersten Konferenzteilnehmer im Zeitintervall zwischen den Zeitpunkten $t_1$ und $t_2$ ein Gewichtungsfaktor $G_{1g}$ (oder $G_{2s}$) höchstens gleich einem maximalen Wert $G_{1max}$ zugeordnet.

Zum Zeitpunkt $t_2$ wird der zweite Konferenzteilnehmer als sprechaktiv erkannt, da sein Intensitätssignal $I_2$ die Schwelle $S_2^{(I)}$ überschreitet.

Sobald nur der zweite Konferenzteilnehmer sprechaktiv ist (ab Zeitpunkt $t_3$), wird sein Gewichtungsfaktor $G_2$ auf $G_{2max}$ erhöht. Der Gewichtungsfaktor $G_1$ des ersten Konferenzteilnehmers wird auf $G_{1min}$ verkleinert (siehe Fig. 5e) und Fig. 5f)).

Die in Fig. 5e) bzw. Fig. 5f) dargestellte sprungförmige Einstellung der Gewichtungsfaktoren $G_{1s}$ bzw. $G_{2s}$ führt zu Schaltgeräuschen bzw. störenden Lautstärkesprüngen. Dieser Effekt tritt gehäuft dann auf, wenn während des Gesprächsverlaufs das Intensitätssignal $I_n$ die Schwelle $S_n^{(I)}$ nur kurzzeitig unterschreitet (z.B. in stimmlosen Sprachsegmenten). Wie aus Fig. 5f) zum Zeitpunkt $t_4$ ersichtlich ist, fällt der Gewichtungsfaktor $G_{2s}$ in einer solchen Situation auf den minimalen Wert $G_{2min}$. Führt man dagegen die Einstellung der Gewichtungsfaktoren gleitend durch, wie es z.B. in Fig. 5g) und Fig. 5h) gezeigt ist, so werden derartige kurze Einbrüche in der Verstärkung weitgehend vermieden.

4

# EP 0 135 229 B1

Will man auf die Dämpfungsregelschaltung 9' und die Erweiterung des Zahlenbereiches verzichten, so muß durch entsprechendes Einstellen der Gewichtungsfaktoren dafür gesorgt werden, daß bei der Bildung der Teilsummen kein Überlauf auftritt. Dies wird bei der ersten Ausführungsform gemäß Fig. 1 erreicht.

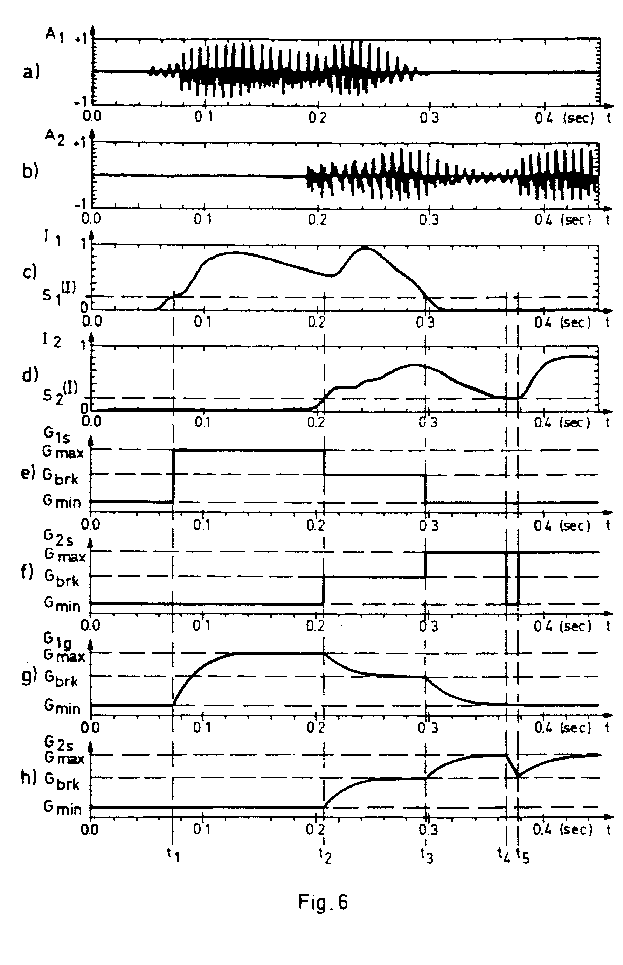

In Fig. 6a bzw. 6b) ist zu erkennen, daß eine Aufsummation der Sprachsignale A1 und A2 zu einem Überschreiten des Zahlenbereiches führen könnte (ab dem Zeitpunkt $t_2$).

Um dies zu verhindern, dann der Gewichtungsfaktor G1 von $G_{1max}$ auf $G_{1brk}$ verkleinert und der Gewichtungsfaktor $G_2$ von $G_{2min}$ nur auf $G_{2brk}$ vergrößert werden (siehe Fig. 6e) und Fig. 6f bzw. Fig. 6g) und Fig. 6h)).

## Patentansprüche

1. Verfahren für eine Konferenzeinrichtung eines Vermittlungssystems, insbesondere einer PCM-Nebenstellennlage, bei der nichtlinear codierte Sprachproben in linear codierte Sprachproben umgesetzt, die von einzelnen Konferenzteilnehmern einer Konferenzverbindung stammenden Sprachproben miteinander verglichen und in Abhängigkeit des Vergleiches sprechaktive und nichtsprechaktive Konferenzteilnehmer unterschieden werden und alle Sprachproben einer Addition zugeführt werden, wobei die Sprachproben nichtsprechaktiver Konferenzteilnehmer bedämpft werden und alle Sprachproben anschließend wieder in nichtlinear codierte Sprachproben umgesetzt werden, dadurch gekennzeichnet, daß sowohl die Sprachproben der nichtsprechaktiven Konferenzteilnehmer als auch die Sprachproben der sprechaktiven Teilnehmer jeweils mit einem aus der gemessenen Sprachintensität jedes Konferenzteilnehmers ermittelten Gewichtungsfaktor vor der Aufsummierung multiplikativ verknüpft werden, wobei die Gewichtungsfaktoren so gewählt werden, daß die Sprachproben ihrer Intensität entsprechend gedämpft werden.

2. Verfahren für eine Konferenzeinrichtung nach Anspruch 1, dadurch gekennzeichnet, daß zur Aufsummierung Addierer (13) mit erweitertem Zahlenbereich verwendet werden und die bei der Aufsummierung auftretenden Teilsummen $(T_n)$ einer Dämpfungsregelung unterworfen werden, welche die Teilsummen $(T_n)$ aus dem erweiterten Zahlenbereich durch Gewichtung mit Dämpfungsfaktoren $(v_n)$ in den ursprünglichen Zahlenbereich zurückführt.

3. Verfahren für eine Konferenzeinrichtung nach Anspruch 2, dadurch gekennzeichnet, daß zur Aufsummierung Addierer (13) mit erweitertem Zahlenbereich verwendet werden und die bei der Aufsummierung auftretende Teilsumme $(T_n)$ einem Begrenzer zugeführt wird, der die den ursprünglichen Zahlenbereich überschreitenden Teilsummen auf den höchsten Zahlenwert des ursprünglichen Zahlenbereiches begrenzt.

4. Verfahren für eine Konferenzeinrichtung nach Anspruch 1, 2 oder 3, dadurch gekennzeichnet, daß der Gewichtungsfaktor (z.B. $G_1$) eines in der Vergangenheit als sprechaktiv eingestuften ersten Konferenzteilnehmers betragsmäßig abnimmt, sobald ein in der Vergangenheit als nichtsprechaktiv eingestufter zweiter Konferenzteilnehmer als sprechaktiv eingestuft wird und daß der Gewichtungsfaktor (z.B. $G_2$) dieses zweiten Konferenzteilnehmers betragsmäßig zunimmt.

5. Verfahren für eine Konferenzeinrichtung nach Anspruch 4, dadurch gekennzeichnet, daß die betragsmäßige Änderung eines Gewichtungsfaktors (z.B. $G_1$) gleitend vorgenommen wird.

6. Verfahren für eine Konferenzeinrichtung nach einem der Ansprüche 4 oder 5, dadurch gekennzeichnet, daß die Zu- oder Abnahme der Gewichtungsfaktoren beim Übergang von sprechaktive in nichtsprechaktive Phase und umgekehrt nichtlinear und unter Berücksichtigung des augenblicklichen und vergangenen Aktivitätszustandes erfolgt.

7. Verfahren für eine Konferenzeinrichtung nach einem der Ansprüche 4 bis 6, dadurch gekennzeichnet, daß für jeden Konferenzteilnehmer untere und obere Grenzen (z.B. $G_{1min}$ und $G_{1max}$) des Gewichtungsfaktors vorgebbar sind, welche seiner im vergangenen Gesprächsverlauf maximal gemessenen Sprachintensität (z.B. $I_1$) angepaßt werden.

8. Verfahren für eine Konferenzeinrichtung nach einem der Ansprüche 4 bis 6, dadurch gekennzeichnet, daß für jeden Konferenzteilnehmer untere und obere Grenzen (z.B. $G_{1min}$, $G_{1max}$) des Gewichtungsfaktors vorgebbar sind, welche seiner im vergangenen Gesprächsverlauf im Mittel gemessenen Sprachintensität (z.B. $I_1$) angepaßt werden.

9. Verfahren für eine Konferenzeinrichtung nach einem der Ansprüche 7 oder 8, dadurch gekennzeichnet, daß in einer Gesprächsphase, in der mehrere Teilnehmer als sprechaktiv eingestuft werden, alle Gewichtungsfaktoren, die sprechaktiv eingestuften Konferenzteilnehmern zugeordnet sind, kleiner als die obere Grenze (z.B. $G_{1max}$) des Gewichtungsfaktors gewählt werden.

10. Schaltungsanordnung eines Vermittlungssystems mit einer Konferenzeinrichtung, insbesondere eine PCM-Nebenstellenanlage, bei der von einzelnen Konferenzteilnehmern stammende nichtlinear codierte Sprachproben in einem ersten Codeumsetzer (2) in linear codierte Werte umgewandelt werden, mit einem Summierer (8'), dem diese umgewandelten Werte zugeführt sind, sowie einem zweiten Codeumsetzer (11), der mit den Ausgängen des Summierers (8') verbunden ist, dadurch gekennzeichnet, daß eine Steuereinrichtung (6) zwischen dem ersten Codeumsetzer (2) und dem Summierer (8') angeordnete Multiplizierer (7) steuert, wobei mit jedem Ausgang des ersten Codeumsetzers (2) erste Meßeinrichtungen (4) verbunden sind, deren Ausgänge der Steuereinrichtung (6) zugeführt sind und daß zwischen dem Summierer (8') und dem zweiten Codeumsetzer (11) eine Dämpfungsregelschaltung (9')

5

angeordnet ist, welche für jeden Ausgang des Summierers (8') eine zweite Meßeinrichtung (14), eine Einrichtung (15) zur Ableitung des Dämpfungsfaktors ($v_n$) aus den gemessenen Sprachintensitäten und einen Multiplizierer (16) umfaßt.

11. Schaltungsanordnung nach Anspruch 10, dadurch gekennzeichnet, daß in dem Summierer (8') Addierer mit erweitertem Zahlenbereich verwendet werden.

12. Schaltungsanordnung nach Anspruch 10, dadurch gekennzeichnet, daß den Eingängen des zweiten Codeumsetzers (11) ein Begrenzer (17) vorgeschaltet ist.

**Revendications**

1. Procédé destiné à un dispositif de conférence d'un système de commutation, en particulier un central téléphonique automatique privé PCM, dans lequel des échantillons de parole à codage non linéaire sont convertis en échantillons de parole à codage linéaire, les échantillons de parole provenant de divers participants à la conférence d'une connexion de conférence sont comparés les uns aux autres et, en fonction de la comparaison, une distinction est faite entre participants vocalement actifs et participants non vocalement actifs et tous les échantillons de parole sont amenés à une addition, les échantillons de parole de participants à la conférence non vocalement actifs étant amortis et tous les échantillons de parole étant ensuite reconvertis en échantillons de parole à codage non linéaire, caractérisé en ce que les échantillons de parole des participants à la conférence non vocalement actifs et les échantillons de parole des participants vocalement actifs sont soumis à une combinaison logique multiplicative avant la sommation, chaque fois avec un facteur de pondération déterminé à partir de l'intensité vocale mesurée de chaque participant à la conférence, les facteurs de pondération étant choisis tels que les échantillons de parole soient amortis selon leur intensité.

2. Procédé destiné à un dispositif de conférence suivant la revendication 1, caractérisé en ce que des additionneurs (13) à domaine numérique élargi sont utilisés pour la sommation et les sommes partielles ($T_n$) apparaissant lors de la sommation sont soumises à une régulation d'amortissement qui ramène ces sommes partielles ($T_n$) du domaine numérique élargi dans le domaine numérique initial par une pondération à l'aide de facteurs d'amortissement ($v_n$).

3. Procédé destiné à un dispositif de conférence suivant la revendication 2, caractérisé en ce que des additionneurs (13) à domaine numérique élargi sont utilisés pour la sommation et les sommes partielles ($T_n$) apparaissant lors de la sommation sont amenées à un limiteur qui limite les sommes partielles dépassant le domaine numérique initial à la valeur numérique maximale du domaine numérique initial.

4. Procédé destiné à un dispositif de conférence suivant la revendication 1, 2 ou 3, caractérisé en ce que le facteur de pondération (par exemple $G_1$) d'un premier participant à la conférence précédemment classé comme vocalement actif diminue en valeur absolue dès qu'un deuxième participant à la conférence précédemment classé comme non vocalement actif est classé comme vocalement actif et en ce que le facteur de pondération (par exemple $G_2$) de ce deuxième participant à la conférence augmente en valeur absolue.

5. Procédé destiné à un dispositif de conférence suivant la revendication 4, caractérisé en ce que la variation en valeur absolue d'un facteur de pondération (par exemple $G_1$) est effectuée progressivement.

6. Procédé destiné à un dispositif de conférence suivant l'lune ou l'autre des revendications 4 et 5, caractérisé en ce que l'augmentation ou la diminution des facteurs de pondération, lors du passage de la phase vocalement active à la phase non vocalement active et inversement, est réalisée d'une manière non linéaire et en tenant compte de l'état d'activité du moment et de l'état d'activité précédent.

7. Procédé destiné à un dispositif de conférence suivant l'une quelconque des revendications 4 à 6, caractérisé en ce que pour chaque participant à la conférence peuvent être prédéfinies des limites inférieure et supérieure (par exemple $G_{1min}$ et $G_{1max}$) du facteur de pondération qui sont adaptées à son intensité vocale maximale (par exemple $I_1$) mesurée au cours de la conversation qui a déjà eu lieu.

8. Procédé destiné à un dispositif de conférence suivant l'une quelconque des revendications 4 à 6, caractérisé en ce que pour chaque participant à la conférence peuvent être prédéfinies des limites supérieure et inférieure (par exemple $G_{1min}$, $G_{1max}$) du facteur de pondération qui sont adaptées à son intensité vocale moyenne (par exemple $I_1$) mesurée au cours de la conversation qui a déjà eu lieu.

9. Procédé destiné à un dispositif de conférence suivant l'une ou l'autre des revendications 7 et 8, caractérisé en ce qu'au cours d'une phase de conversation dans laquelle plusieurs participants sont classés comme vocalement actifs, tous les facteurs de pondération qui sont associés à des participants à la conférence classés comme vocalement actifs sont choisis inférieurs à la limite supérieure (par exemple $G_{1max}$) du facteur de pondération.

10. Montage de circuit d'un système de commutation à dispositif de conférence, en particulier d'un central téléphonique automatique privé PCM, dans lequel des échantillons de parole à codage non linéaire provenant de divers participants à la conférence sont convertis en valeurs à codage linéaire dans un premier convertisseur de code (2), comportant un sommateur (8') auquel ces valeurs converties sont appliquées, ainsi qu'un second convertisseur de code (11) qui est connecté aux sorties du sommateur (8'), caractérisé en ce qu'un dispositif de commande (6) commande des multiplicateurs (7) disposés entre le premier convertisseur de code (2) et le sommateur (8'), des premiers dispositifs de mesure (4) dont les sorties sont appliquées au dispositif de commande (6) étant connectés à chaque sortie du premier convertisseur de code et en ce qu'entre le sommateur (8') et le second convertisseur de code (11) est disposé un circuit régulateur d'amortissement (9') qui, pour chaque sortie du sommateur (8'), comporte un second dispositif de mesure (14), un dispositif (15) pour établir le facteur d'amortissement ($v_n$) à partir des intensités vocales mesurées et un multiplicateur (16).

11. Montage de circuit suivant la revendication 10, caractérisé en ce que des additionneurs à domaine numérique élargi sont utilisés dans le sommateur (8').

12. Montage de circuit suivant la revendication 10, caractérisé en ce qu'un limiteur (17) est monté en amont des entrées du second convertisseur de code (11).

## Claims

1. Method of establishing a conference connection of a switching system, more specifically, of a PCM private branch exchange, according to which non-linearly coded speech samples are converted into linearly coded speech samples, the speech samples from individual participants of a conference connection are compared with each other, and speaking and silent participants are distinguished depending on this comparison and all speech samples are applied to an addition, the speech samples of silent participants of the conference are attenuated and all speech samples are then again converted into non-linearly codes speech samples, characterised in that both the speech samples of the silent conference participants and the speech samples of the speaking participants are multiplicatively combined with a weighting factor averaged from the measured speech intensity of each conference participant prior to the summation, the weighting factors being selected such that the speech samples are attenuated in accordance with their intensity.

2. Method of establishing a conference connection as claimed in claim 1, characterised in that adders (13) having each an extended numerical range are utilised for the summation and the partial sums ($T_n$) occurring during the summation are subjected to an attenuation control, which control brings the partial sums ($T_n$) from the extended numerical range back to the original numerical range by means of a weighting with attenuation factors ($v_n$).

3. Method of establishing a conference connection as claimed in claim 2, characterised in that adders (13) having such an extended numerical range are utilised for the summation and in that the partial sum ($T_n$) occurring at the summation is applied to a limiter limiting the partial sums that exceed the original numerical range to the upper numerical value of the original numerical range.

4. Method of establishing a conference connection as claimed in claim 1, 2 or 3, characterised in that the weighting factor (e.g. $G_1$) of a first conference participant previously graded as a speaking participant decreases regarding its amount once a second participant previously graded as silent is graded as a speaking participant and in that the weighting factor (e.g. $G_2$) of this second conference participant increases as regards its amount.

5. Method of establishing a conference connection as claimed in claim 4, characterised in that the change of the amount of a weighting factor (e.g. $G_1$) varies in time.

6. Method of establishing a conference connection as claimed in one of the claims 4 or 5, characterised in that the increase of the weighting factors takes place at the transition from the speaking to the silent state and vice versa in a non-linear manner and while the instantaneous and previous activity state is taken into account.

7. Method of establishing a conference connection as claimed in one of the claims 4 to 6, characterised in that for each conference participant upper and lower limits (e.g. $G_{1min}$ and $G_{1max}$) of the weighting factor can be predetermined, which are adapted to its maximum speech intensity (e.g. $I_1$) measured during the previous conversation.

8. Method of establishing a conference connection as claimed in one of the claims 4 to 6, characterised in that for each conference participant upper and lower limits (e.g. $G_{1min}$, $G_{1max}$) of the weighting factor can be predetermined which are adapted to its average speech intensity (e.g. $I_1$) measuring during the previous conversation.

9. Method of establishing a conference connection as claimed in one of the claims 7 or 8, characterised in that in a speech phase during which various participants are graded as speaking, all weighting factors assigned to conference participants who have been graded as speaking participants are chosen below upper limit (e.g. $G_{1max}$) of the weighting factor.

10. Circuit arrangement of a switching system having a conference connection, more specifically, a PCM private branch exchange, in which non-linearly coded speech samples from individual conference participants are converted into linearly coded values in a first code convertor (2), comprising a summing circuit (8') to which these converted values are applied, and comprising a second code convertor (11) connected to the outputs of the summing circuit (8'), characterised in that a control arrangement (6) controls multipliers (7) inserted between the first code converter (2) and the summing circuit (8'), a first measuring device (4) being connected to each output of the first code convertor (2), the output signals of this measuring device being applied to the control arrangement (6) and in that between the summing circuit (8') and the second code convertor (11) an attenuation control circuit (9') is inserted that includes for each output of the summing circuit (8') a second measuring device (14), an arrangement (15) for driving the attenuation factor ($v_n$) from the measured speech intensities and a multiplier (16).

11. Circuit arrangement as claimed in claim 10, characterised in that adders having extended numerical ranges are utilised in the summing circuit (8').

12. Circuit arrangement as claimed in claim 10, characterised in that a limiter (17) is inserted before the inputs of the second code convertor (11).

Fig 1

Fig. 2

Fig. 3

Fig. 4

Fig.5

Fig. 6

$$V(k) = (1+1/16) - p(k)/16 \quad ; \quad v(k) = 0.01 \times V(k) + 0.99 \times v(k)$$

Fig 7

$V(k) \; = \; 1/p(k) \qquad ; \qquad v(k) \; = \; 0.01 \times V(k) \; + \; 0.99 \times v(k)$

Fig. 8

EP 0 135 229 B1